# EUROPEAN PATENT APPLICATION

(11) **EP 4 696 204 A1**
(43) Date of publication of application: **18.02.2026**
(21) Application number: 25191306.7
(22) Date of filing: 23.07.2025
(51) Int. Cl.: A47J 31/06, A47J 31/36

(54) **MACHINE FOR PREPARING INFUSED BEVERAGES**

(30) Priority: 13.08.2024 IT 202400018979
(71) Applicant: Capitani S.r.l., 22043 Solbiate con Cagno (CO) (IT)
(72) Inventor: CAPITANI, Gionata, Albiolo (CO) (IT)
(74) Representative: Fabiano, Piero

(57) **Abstract**

A machine for preparing infused beverages, such for example coffee, of the type operating with pods or capsules containing aromatic essences is described, comprising:
- an infusion assembly (1), comprising
- a removable adapter (7) extending about a vertical axis (X-X) provided with a first coupling portion (8) for coupling to an infusion capsule or pod;
- a first infusing element (3) provided with an accommodating seat (14) for housing said removable adapter (7) and a second infusing element (4) cooperating with said adapter to define an infusion chamber (2) when coupled therewith;
- said removable adapter (7) further comprises a first delivery duct (9) configured for delivering an infused beverage coming from said infusion chamber (2);
- said removable adapter comprising a bottom wall (13) from which said first delivery duct (9) extends, and at least one first supporting element (10) configured for abutting against a wall of the capsule or pod coupled to said removable adapter (7).

## Description

### Field of the invention

The present invention concerns the field of machines for making infused beverages such as coffee, tea, herbal teas, chocolate, etc. starting from a capsule or pod containing an aromatic substance.

### Known art

The use of machines for generating infused beverages of different flavors, for example coffee, tea or aromatic herbal teas, is known.

A particular type of the aforesaid machines, using disposable capsules or pods, is recently witnessing an ever increasing diffusion; such capsules or pods contain a predefined single portion of substance to be subjected to infusion, for example coffee, thus the aforementioned machines are appropriate for combining great simplicity/versatility of use with optimal organoleptic properties of the beverage.

The machines generally have an infusion assembly, an exchanger and a recirculation pump operatively connected.

Infusion assemblies for coffee machines generally comprise a first cup-shaped infusing element normally named female infuser and comprising a cavity adapted for housing an infusion capsule and/or pod containing an aromatic essence, and a second element normally named male infuser and adapted for closing the aforesaid cavity so as to define an infusion chamber together with the first infusing element.

The capsule, containing the aromatic essence, is placed or transported into the infusion chamber so that the extraction of the aromatic essence occurs with the injection of pressurized hot water into the infusion capsule and/or pod.

The infusion chamber communicates with at least one outlet duct for the infused beverage, ending with an outlet nozzle or hopper for the outflow of the beverage.

Generally, the female infuser of an infusion assembly is sized according to a specific pod or capsule, or vice-versa, so that the respective infusion assembly can operate properly with that pod or capsule only, for example produced by the manufacturer of the machine.

It is actually known that the greatest source of profit for manufacturers of machines for coffee or other beverages is not the machine itself, but rather the pods or capsules containing the aromatic substance, of which millions are consumed every year.

Manufacturers of machines thus aim to force the buyer of a specific brand of machine to only use capsules or pods compatible with such machine. On the other hand, however, it is in the user's interest to free himself/herself from the manufacturer of the machine and to thus be able to use pods or capsules of other manufacturers, for example cheaper or containing different aromatic substances.

For example, only some manufacturers can provide completely biodegradable or compostable capsules made of paper material.

It is clear that the use of such capsules, which should obviously be encouraged, is limited in that these manufacturers cannot produce capsules compatible with all the machines of the most popular brands.

Moreover, some aromatic substances for preparing infused beverages different from coffee are contained in capsules of sizes and shape different from the coffee capsules and cannot thus be used in machines whose infusion chamber was designed for accommodating coffee capsules only.

Object of the present invention is to overcome the drawbacks mentioned above with reference to the infusion assemblies of the known art.

In particular, an object of the invention is to make a machine for preparing infused beverages, which machine can be used with pods or capsules of different shapes and/or sizes.

### Summary of the invention

Therefore, in its first aspect, the invention concerns a machine for preparing infused beverages, such as coffee, of the type operating with pods or capsules containing aromatic essences, comprising:
- an infusion assembly, comprising
- a removable adapter extending about a vertical axis provided with a first coupling portion for coupling to an infusion capsule or pod;
- a first infusing element provided with an accommodating seat for housing said removable adapter and a second infusing element cooperating with said adapter to define an infusion chamber when coupled therewith;

- said removable adapter further comprises a first delivery duct configured for delivering an infused beverage coming from said infusion chamber;
- said removable adapter comprising a bottom wall from which said first delivery duct extends, and at least one first supporting element configured for abutting against a wall of the capsule or pod coupled to said removable adapter.

In the aforesaid aspect, the present invention can have at least one of the preferred characteristics described hereunder.

The aforesaid at least one first supporting element preferably extends circumferentially about the first delivery duct and parallel to the vertical axis.

The aforesaid at least one first supporting element advantageously extends parallel to the vertical axis for a dimension less than or equal to 10 mm.

The aforesaid first supporting element conveniently extends circumferentially and concentrically about the first delivery duct, thus forming a radius of between 3 and 20 mm with the vertical axis.

The removable adapter preferably comprises a second supporting element configured for abutting against a wall of the capsule or pod coupled to the removable adapter, the second supporting element being arranged radially inside the aforesaid at least one first supporting element.

The removable adapter advantageously further comprises at least one passage opening formed at least partially on the second supporting element, the passage opening being configured for allowing the infused beverage to pass from the removable adapter to the delivery duct.

The removable adapter preferably comprises at least two passage openings arranged between the bottom wall and the second supporting element.

The removable adapter advantageously comprises a pre-infusion element configured for abutting against said first supporting element, said pre-infusion element being made of elastomer material and being provided with a valve element.

The pre-infusion element preferably comprises a discoid element and the valve element comprises a cut in the discoid element.

Further characteristics and advantages of the invention will become clearer in the detailed description of some preferred, but not exclusive, embodiments of a machine for preparing infused beverages according to the present invention.

### Brief description of the drawings

That description will be set forth hereunder with reference to the accompanying drawings provided by way of example only and therefore not limiting, in which:
- figure 1 shows a schematic perspective view of a portion of a machine for preparing infused beverages with a first embodiment of a removable adapter according to the present invention;
- figure 2 shows a schematic perspective view of a portion of a machine for preparing infused beverages with a second embodiment of a removable adapter according to the present invention;
- figure 3 shows a schematic perspective view of a portion of a machine for preparing infused beverages with a third embodiment of a removable adapter according to the present invention;
- figure 4 shows a schematic perspective view of a portion of a machine for preparing infused beverages with a fourth embodiment of a removable adapter according to the present invention;
- figure 5 shows a schematic perspective view of a portion of a machine for preparing infused beverages with a fifth embodiment of a removable adapter according to the present invention.

### Detailed description of embodiments of the invention

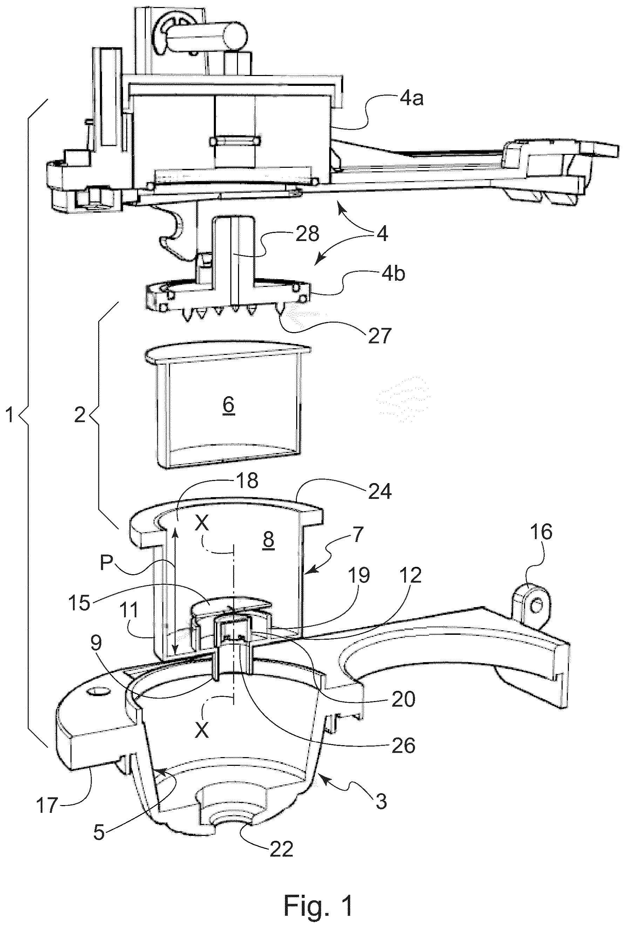

With reference to the figure 1, a portion of a machine for preparing an infused beverage by means of a capsule or pod containing an aromatic substance according to the present invention is shown.

The machine for preparing an infused beverage precisely comprises an infusion assembly 1 and an outer shell configured for at least partially containing the infusion assembly 1.

The infusion assembly 1 comprises a removable adapter 7 provided with a coupling portion for an infusion capsule 6 or infusion pod, a first infusing element 3 provided with an accommodating seat for housing therein the aforesaid removable adapter 7 and a second infusing element 4 cooperating with the removable adapter 7 to define an infusion chamber 2 when coupled therewith.

**In** other words, unlike the known art, the infusion chamber 2 is not "defined" by two portions integral with the machine, but by a removable portion, the removable adapter 7 and a portion which can be integral with the machine, the second infusing element 4.

Therefore, the first infusing element 3 thus mainly has the task of supporting and accommodating the removable adapter 7.

The first infusing element 3 and the second infusing element 4 are supported by a supporting frame or the shell.

At least one of said first infusing element 3 and said second infusing element 4 is a movable infuser. Said movable infuser is rotatable with respect to a hinging point to be brought close to or away from the remaining infusing element, so as to also make the removable adapter 7 rotate to open or close the infusion chamber 2.

In the embodiment shown in the figures, the second infusing element 4 is an element integral with the machine and thus fixed, whereas the first infusing element 3 is a movable element.

To this end, the first infusing element 3 is like a flap hinged at one of its ends 16 proximal to the shell (frame) of the machine and is provided with an accommodating seat 5 for the removable adapter 7 at the remaining end, the distal end 17.

The first infusing element 3, which is precisely the movable infuser in the embodiment example illustrated, is movable between an open position in which it has, at least at its distal end 17, the maximum angular distance from the second infusing element 4, and a closed position, in which it is side-by-side with the second infusing element 4, so that the removable adapter 7 can form the infusion chamber 2 with the latter.

In the embodiments shown in the figures, the second infusing element 4 is precisely the fixed infuser and is preferably made in a first supporting portion 4a and a second removable portion 4b.

The second removable portion 4b can be changed depending on the capsule 6 or pod to be processed.

The second removable portion 4b can be, for example, like in the embodiments shown in figures 1-4, which is provided with piercing tips 27 and a duct 28 for injecting pressurized hot water into the removable adapter 7.

The second removable portion 4b is configured and sized for being combined with the removable adapter 7 to define the infusion chamber 2.

The removable adapter 7 mainly has the task of adapting the machine for preparing infused beverages to different types of capsules or pods and of constructively simplifying the female infuser element, the first infusing element 3 in this case.

To this end, the removable adapter 7 extends about a vertical axis X-X and is provided with a first coupling portion 8 for coupling to an infusion capsule or pod.

According to a first embodiment shown in figure 1, the removable adapter 7 has a cylindrical or truncated cone shaped body 11 extending about the vertical axis X-X and at least one bottom wall 12 from which a delivery duct 9 for delivering the infused beverage extends, again in direction of the vertical axis X-X.

During operation, the infused beverage is actually directly poured from the infusion chamber 2 through the delivery duct 9 into a container outside of the machine, typically a cup of coffee arranged below the delivery duct 9.

In the embodiments shown in the figures, the delivery duct 9 is configured for being engaged with an appropriate seat 22 provided in the first infusing element 3.

The delivery duct 9 is preferably arranged centrally on the bottom wall 12, at the vertical axis X-X.

In the embodiments of figures 1, 3 and 5, the cylindrical or truncated cone shaped body 11 and the bottom wall 12 define an accommodating cavity 18 for accommodating the capsule 6 or pod, which is in this case almost completely housed, or at least for 40% of its vertical extent, in the removable adapter 7, in particular in its accommodating cavity 18.

The accommodating cavity 18 has a maximum depth P measured, in direction of the vertical axis X-X, starting from the plane containing the bottom wall 12.

At the top of the truncated cone body 11, i.e. of the portion opposite that of the bottom wall 12, there is an annular flange 24 configured for abutting between the first 3 and the second 4 infusing elements.

At least one first supporting element 19, configured for abutting against a wall of the capsule or pod to be accommodated, can be present on the bottom wall 12.

In the embodiments of figures 1,3 and 5, the aforesaid first supporting element 19 extends in direction of the vertical axis X-X for a height less than or equal to 5% of the maximum depth P.

In all the embodiments, the first supporting element 19 preferably extends parallel to the vertical axis X-X for a dimension less than or equal to 10 mm.

In the embodiment shown in the figures, the first supporting element 19 extends circumferentially, preferably seamlessly, about the vertical axis X-X.

As an alternative, the first supporting element 19 could extend circumferentially about the vertical axis X-X but in a non-continuous way, i.e. be formed by arcs of a circle alternating with empty portions.

According to an embodiment not shown, there could be two or more supporting elements 19.

In this case, the supporting elements 19 could all be equal in shape and size or could be different, without departing from the protection scope of the present invention.

It is possible to find at least one second supporting element 20 in radial direction inside the first supporting element 19.

The second supporting element 20 is configured for abutting against a wall of the capsule 6 or pod when the latter is coupled to the removable adapter 7.

In the embodiments of figures 1,3 and 5, the second supporting element 20 extends in direction of the vertical axis X-X for a height less than or equal to 5% of the maximum depth P.

In all the embodiments, the second supporting element 20 extends parallel to the vertical axis X-X for a dimension less than or equal to 10 mm.

In direction of the vertical axis X-X, the second supporting element 20 preferably has the same size as the first supporting element 19.

The second supporting element 20 extends circumferentially and concentrically about the vertical axis X-X, thus forming a radius of between 5 and 15 mm.

The second supporting element 20 preferably extends circumferentially and concentrically about the vertical axis X-X, at the delivery duct 9, but opposite the bottom wall 12.

There is at least one passage opening 26 for allowing the infused beverage to pass from inside the removable adapter 7 to the delivery duct 9.

In particular, the aforesaid at least one passage opening 26 is configured for allowing the infused beverage to pass from the area below the capsule or pod, between the first 19 and the second 20 supporting elements and the delivery duct 9.

To this end, in the embodiment shown in the figures, there are multiple passage openings 26 arranged at the base of the second supporting element 20.

Preferably, there are multiple passage openings 26 arranged at the base of the second supporting element 20 and circumferentially spaced.

In the embodiments shown in the figures, the passage openings 26 are all equal in shape and size but could be also all or partly different, without thereby departing from the protection scope of the present invention.

In the embodiments shown in the figures, the passage openings 26 have a substantially rectangular shape.

In the embodiment shown in the figures, the removable adapter 7 can comprise a pre-infusion element 15 configured for abutting at least against the first supporting element 19.

The pre-infusion element 15 is made of elastomer material and is provided with a valve element configured for being opened and letting the beverage pass towards the delivery duct, when the beverage in the removable adapter 7 or capsule 6 exceeds a preset pressure threshold value.

The presence of this valve element concurs in improving the mixing of the aromatic substance with the infusion liquid and, hence, the quality of the beverage.

The pre-infusion element 15 is like a discoid element adapted for abutting against the first and the second supporting elements 20.

The valve element preferably comprises a cut or hole in said discoid element.

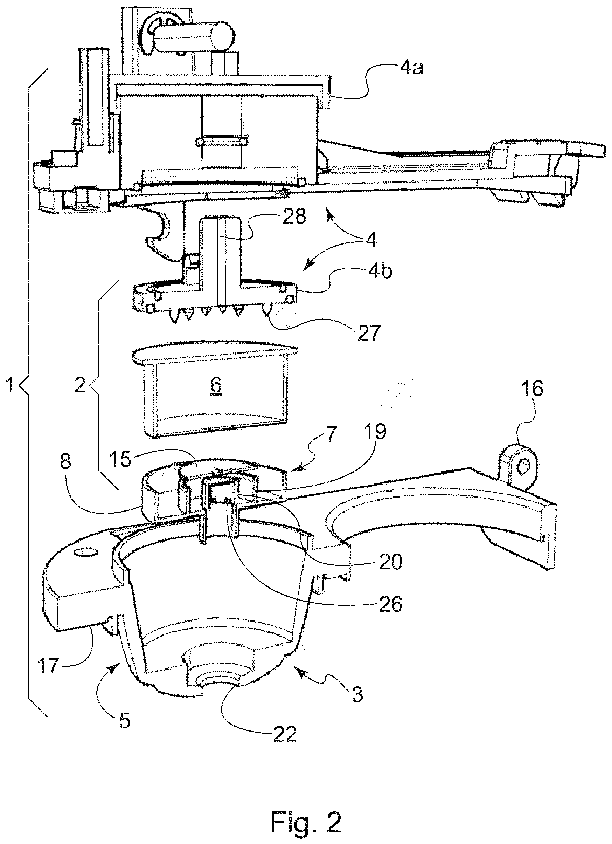

In the embodiment shown in figure 2, the removable adapter 7 is quite similar to the one shown in figure 1, except for its vertical size in direction of the vertical axis X-X.

According to this embodiment, the cylindrical or truncated cone shaped body 11 extending about the vertical axis X-X is actually very compact and, de facto, is limited to the coupling portion 8 provided with bottom wall 12, first and second supporting elements 20, passage openings and pre-infusion element 15.

In this case, the removable adapter 7 is not actually configured for housing the capsule 6 or pod therein, but only for being coupled to it at a portion thereof, preferably lower.

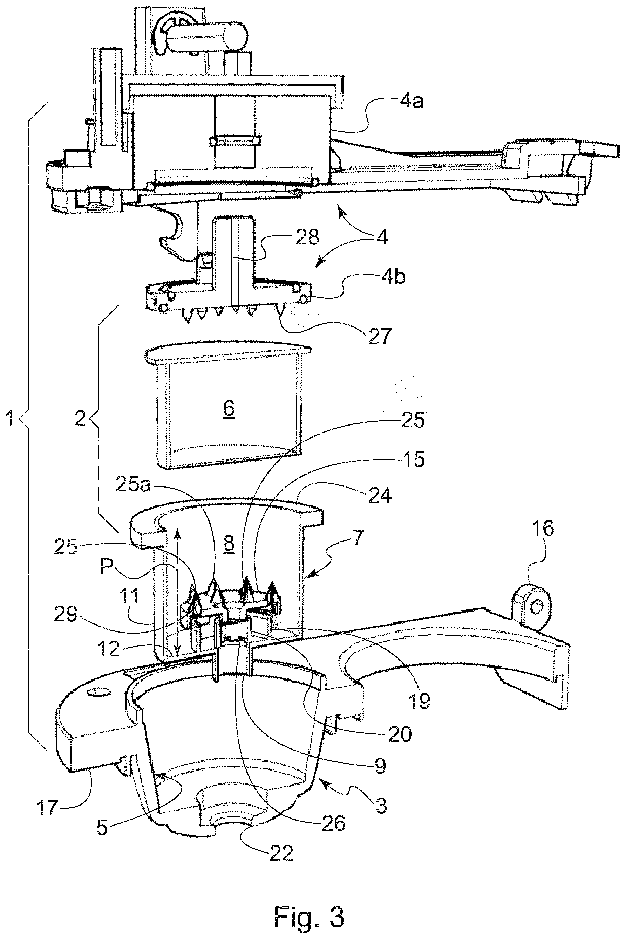

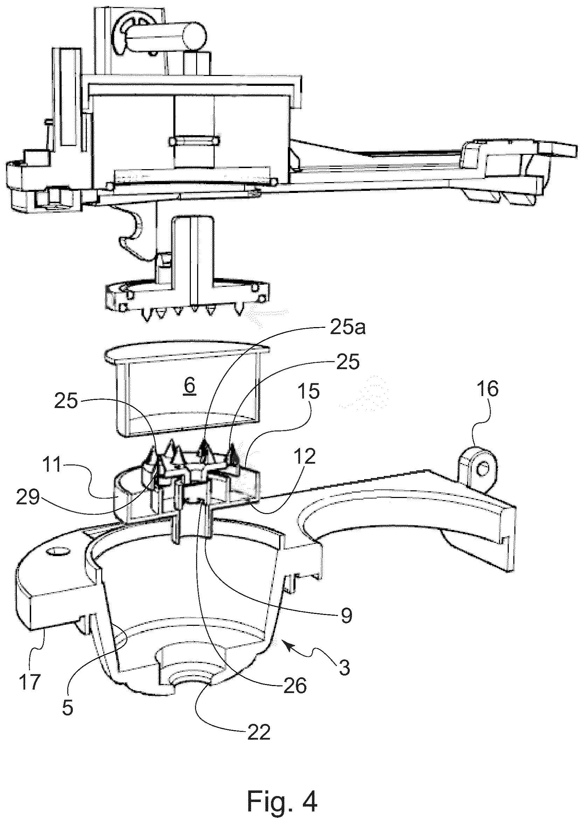

Two other embodiments of the movable adapter quite similar to the embodiments respectively shown in figures 1 and 2, except for the pre-infusion element 15, are shown in figures 3 and 4.

In the embodiments shown in figures 3 and 4, the pre-infusion element 15 is substantially equal and only that of figure 3 will be described hereunder for that reason, it being understood that what is described also applies to the pre-infusion element 15 of figure 4. The pre-infusion element 15 is like a discoid element configured for abutting against the first 19 and the second 20 supporting elements.

The pre-infusion element 15 comprises a plurality of protuberances facing inside the removable adapter 1 and adapted for piercing the casing of the capsule or pod, generally made of aluminum or compostable material.

The protuberances 25, preferably all equal in shape and size, have conical tips 25a provided with slits 29 on their side surfaces which allow, thanks to their size, to make the infused beverage pass, but not the powder.

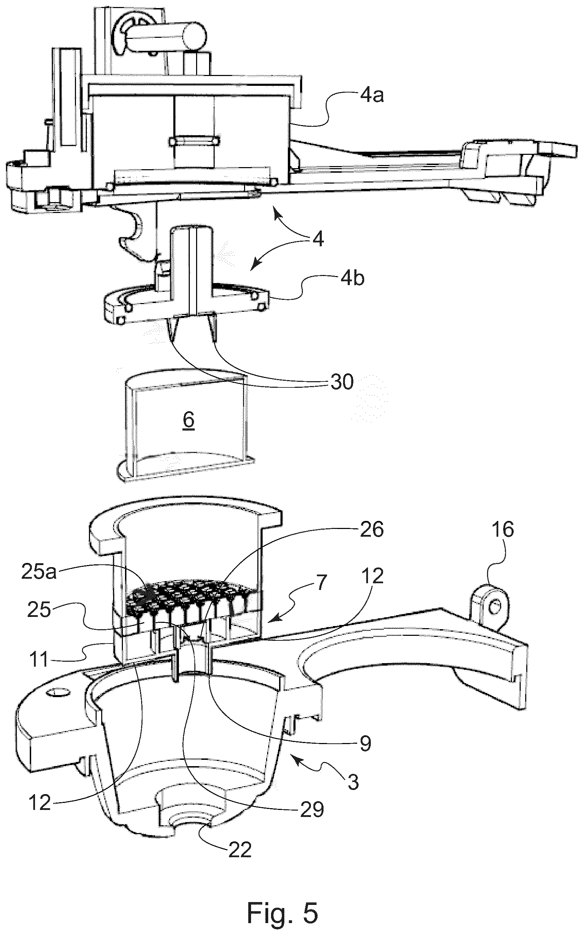

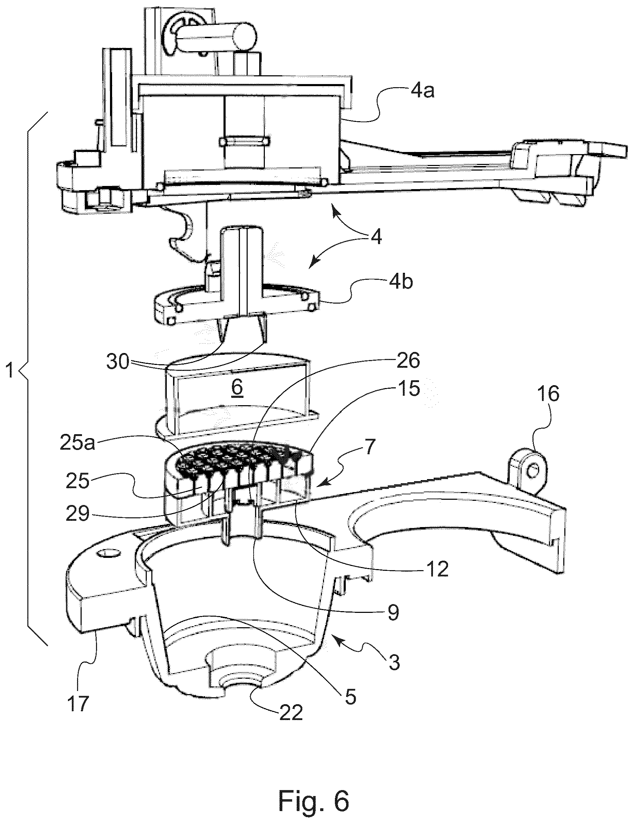

Other two embodiments of the movable adapter 7 quite similar to the embodiments respectively shown in figures 1 and 2, except for the pre-infusion element 15 and the second removable portion 4b, are shown in figures 5 and 6.

In the embodiments shown in figures 5 and 6, the pre-infusion element 15 is substantially equal and only that of figure 5 will be described hereunder for that reason, it being understood that what is described also applies to the pre-infusion element 15 of figure 6.

The pre-infusion element 15 of figure 5 is like a discoid element configured for abutting against the first 19 and the second 20 supporting elements.

Also in this case, the pre-infusion element comprises a plurality of protuberances 25 facing inside the removable adapter and adapted for piercing an upper portion or film of the capsule 6 or pod, generally made of aluminum or compostable material.

The protuberances 25, preferably all equal in shape and size, have truncated conical, preferably squared-based, tips 35a provided with through channels 29 for making the infused beverage pass. During operation, the pressure inside the capsule or pod deforms the upper portion or film of the capsule or pod itself, which thus lays down on the truncated conical tips 25, causing it to be pierced. The beverage comes out through the upper portion or film of the pierced capsule or pod and travels along the through channels 29.

However, only the infused beverage will come out of the through channels 29 since the latter have a size less than that of the coffee powder or beverage, the powder will thus stay inside the capsule or pod.

In this case, the second removable portion 4b has conical piercing tips 30 made of metal material.

Several modifications can be made to the embodiments described in detail, all anyhow remaining within the protection scope of the invention, as defined by the following claims.

## Claims

1. Machine for preparing infused beverages, such as for example coffee, of the type operating with pods or capsules containing aromatic essences, comprising:
- an infusion assembly (1), comprising:
- a removable adapter (7) extending about a vertical axis (X-X) provided with a first coupling portion (8) for coupling to an infusion capsule or pod;
- a first infusing element (3) provided with an accommodating seat (14) for housing said adapter and a second infusing element (4) cooperating with said removable adapter (7) to define an infusion chamber (2) when coupled therewith;
- said removable adapter (7) further comprises a first delivery duct (9) configured for delivering an infused beverage coming from said infusion chamber (2);
- said removable adapter comprising a bottom wall (12) from which said first delivery duct (9) extends, and at least one first supporting element (19) configured for abutting against a wall of the capsule or pod coupled to said removable adapter (7).

2. Machine for preparing infused beverages according to claim 1, **characterized in that** said at least one first supporting element (19) extends circumferentially about said first delivery duct (9) and parallel to the vertical axis (X-X).

3. Machine for preparing infused beverages according to claim 1 or 2, **characterized in that** said first supporting element (19) extends parallel to the vertical axis (X-X) for a dimension less than or equal to 10 mm.

4. Machine for preparing infused beverages according to claim 3, **characterized in that** said first supporting element (19) extends circumferentially and concentrically about said first delivery duct (9), thus forming a radius of between 3 and 20 mm with the vertical axis (X-X).

5. Machine for preparing infused beverages according to claim 3, **characterized by** comprising a second supporting element (20) configured for abutting against a wall of the capsule or pod coupled to said removable adapter (7), said second supporting element (20) being arranged radially inside said first supporting element (19).

6. Machine for preparing infused beverages according to claim 5, **characterized by** comprising at least one passage opening (26), on said second supporting element (20), configured for allowing the passage of the infused beverage from said removable adapter (7) to said delivery duct (9).

7. Machine for preparing infused beverages according to claim 5, **characterized by** comprising at least two passage openings (26) arranged between said bottom wall (12) and said second supporting element (20).

8. Machine for preparing infused beverages according to any one of preceding claims 1 to 7, **characterized by** comprising a pre-infusion element (15) configured for abutting against at least said first supporting element (19), said pre-infusion element (15) being made of elastomer material and being provided with a valve element.

9. Machine for preparing infused beverages according to claim 8, **characterized in that** said pre-infusion element (15) comprises a discoid element and said valve element comprises a cut or hole in said discoid element.
